# EUROPEAN PATENT APPLICATION

(11) **EP 4 266 234 A1**
(43) Date of publication of application: **25.10.2023**
(21) Application number: 23167901.0
(22) Date of filing: 14.04.2023
(51) Int. Cl.: G06Q 40/03, G06Q 40/06, G06Q 30/0279, G06Q 20/24

(54) **METHOD AND APPARATUS FOR FACILITATING ONBOARDING OF MERCHANTS INTO AN ONLINE COMMERCIAL ECOSYSTEM**

(30) Priority: 19.04.2022 US 202217723871
(71) Applicant: Affirm, Inc., San Francisco, CA 94108 (US)
(72) Inventor: YAO, Yuan, San Francisco, 94108 (US); XU, Jiarui, San Francisco, 94108 (US); RAMKUMAR, Karthik, Walnut Creek, 94596 (US); NIKOLOV, Ivajlo, San Francisco, 94108 (US); FAN, Ruixiang, San Francisco, 94108 (US)
(74) Representative: Piotrowicz, Pawel Jan Andrzej

(57) **Abstract**

A method of facilitating merchant onboarding to a selective financing and payment platform may include automatically gathering information on a plurality of websites of candidate merchants and automatically processing the gathered information with a selected underwriting algorithm to determine whether one or more of the candidate merchants are eligible to be selected candidates for integration into the selective financing and payment platform. The method may further include, responsive to identification of a selected candidate determined to be eligible, providing an onboarding package to the selected candidate to enable the selected candidate to offer financing terms to customers via the selective financing and payment platform.

## Description

### TECHNICAL FIELD

Example embodiments generally relate to financial industry technologies and, in particular, relate to apparatuses, systems, and methods for facilitating commerce by enabling merchants to easily enter into an ecosystem or platform via which customer financing and payment options are handled, to improve merchant access to customers.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions.

In each of the cases above, a relatively rigid and pre-planned sequence of activities occurs before, during, and after the transaction is closed. The customer makes the decision up front as to which mechanism to employ, and the handling of the entire transaction after that initial decision is made follows existing and well-known paths to completion. While there is great flexibility in that many options are available to customers (particularly those with good credit), the flexibility can be somewhat illusory in situations in which merchants do not accept a certain payment method.

Merchant acceptance of payment methods may, in some cases, be a function of the costs to the merchant for accepting each payment method. If the merchant has to pay to access processing services for a given payment method, the merchant may decide to forgo the opportunity based on cost. However, in some situations, the merchant may actually have to take positive steps to apply for participation in a particular payment platform and/or may have to obtain specific equipment. The rigmarole associated with onboarding merchants may therefore create a certain amount of transactional friction, which may inhibit certain merchants from entering into an ecosystem that is ultimately aimed at giving customers easier access to funds that would be spent with the merchant. This may frustrate customers that would otherwise prefer not only to use their preferred payment method, but to do so at each and every merchant with which the customers would like to conduct business.

Example embodiments are aimed at reducing the transactional friction described above by creating a technical platform that uses intelligent technical means by which to not only make merchant onboarding easier for the merchant, but also make it attractive and relatively automated.

### BRIEF SUMMARY OF SOME EXAMPLES

Accordingly, some example embodiments may enable the provision of technical means by which to give a facilitator of loans the ability to attract merchants to integrate into an ecosystem for supporting commerce between members (e.g., customers, merchants and lenders) of the ecosystem.

In an example embodiment, a method of facilitating merchant onboarding to a selective financing and payment platform may be provided. The method may include automatically gathering information on a plurality of websites of candidate merchants and automatically processing the gathered information with a selected underwriting algorithm to determine whether one or more of the candidate merchants are eligible to be selected candidates for integration into the selective financing and payment platform. The method may further include, responsive to identification of a selected candidate determined to be eligible, providing an onboarding package to the selected candidate to enable the selected candidate to offer financing terms to customers via the selective financing and payment platform.

In another example embodiment, an apparatus for facilitating merchant onboarding to a selective financing and payment platform may be provided. The apparatus may include processing circuitry configured for automatically gathering information on a plurality of websites of candidate merchants, automatically processing the gathered information with a selected underwriting algorithm to determine whether one or more of the candidate merchants are eligible to be selected candidates for integration into the selective financing and payment platform, and, responsive to identification of a selected candidate determined to be eligible, providing an onboarding package to the selected candidate to enable the selected candidate to offer financing terms to customers via the selective financing and payment platform.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform according to an example embodiment;
FIG. 2 illustrates a functional block diagram of an apparatus for defining a facilitation agent according to an example embodiment;
FIG. 3 illustrates a block diagram showing control flow for merchant onboarding in accordance with an example embodiment;
FIG. 4 illustrates a block diagram of a method for facilitating merchant onboarding to a selective financing and payment platform in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. As such, the data processing platform may be embodied as a selective financing and payment platform (i.e., SFP platform) that connects customers and merchants (or vendors) to banks, payment services, and a transaction facilitator within the financial industry. By enabling data between the players on or members of the platform to be shared, and by further providing customers with tools for using the platform to manage individual transactions before, during and also sometimes after the transactions occur, customers may have increased flexibility for managing their funds in a way that prevents over-extension, while still maximizing their access to the goods and services they desire or need at any given time. Moreover, the platform may be employed under the management of the facilitator to control the usage of data on mutually agreeable terms for all participants who access the platform. Accordingly, a commercial framework can be provided by a technical platform designed to connect customers with access to financial support to effect transactions in real time with added flexibility to determine terms upon which each transaction will be executed with participating merchants. The technical platform described herein, however, further streamlines onboarding of merchants who wish (or may wish) to participate as a member of the ecosystem created by example embodiments. In other words, instead of merely having a passive platform that enables merchants who desire to become members of the ecosystem, example embodiments will provide a technical means by which to pre-qualify merchants and make the ability of pre-qualified merchants to be onboarded onto the platform relatively seamless and easy. The creation of a technical platform for proactively evaluating merchants and, in some cases, approaching the merchants to offer access to the platform automatically, may expand the ecosystem in which customers (many of whom may wish to utilize the platform to make purchases via buy now, pay later (BNPL) financing) can engage in transactions with merchants. This may drive more sales for participating merchants, and more satisfaction for the customers. As such, one platform, managed by the facilitator, may be provided for the interaction of multiple parties to enable usage of the platform to provide a flexible and yet cohesive experience for customers that maximizes responsible access to financial freedom and satisfaction.

Example embodiments not only provide the SFP platform, but also provide various enabling technologies that may facilitate operation of the SFP platform itself or of modules that may interact with the SFP platform for processing transactions amongst parties that engage with, or are members, of the ecosystem created by the SFP platform. Example embodiments therefore provide the SFP platform, supporting structures and technologies for its use, and also for processing transactions between members (e.g., lenders, customers and merchants). Moreover, as noted above, the SFP platform further takes an active role in identifying merchants who are eligible to participate in the SFP platform, and engages with such merchants in order to facilitate their easy access to participating in the ecosystem and to the customers who are also members of the ecosystem. In other words, example embodiments may also provide for enhancement of functionalities associated with the environment that is created by the SFP platform, particularly in relation to the onboarding of merchants that will become members of or participants in the ecosystem of the SFP platform. The SFP platform may therefore provide a technical mechanism by which to enhance commerce in a responsible way that is both empathetic and empowering to customers and merchants.

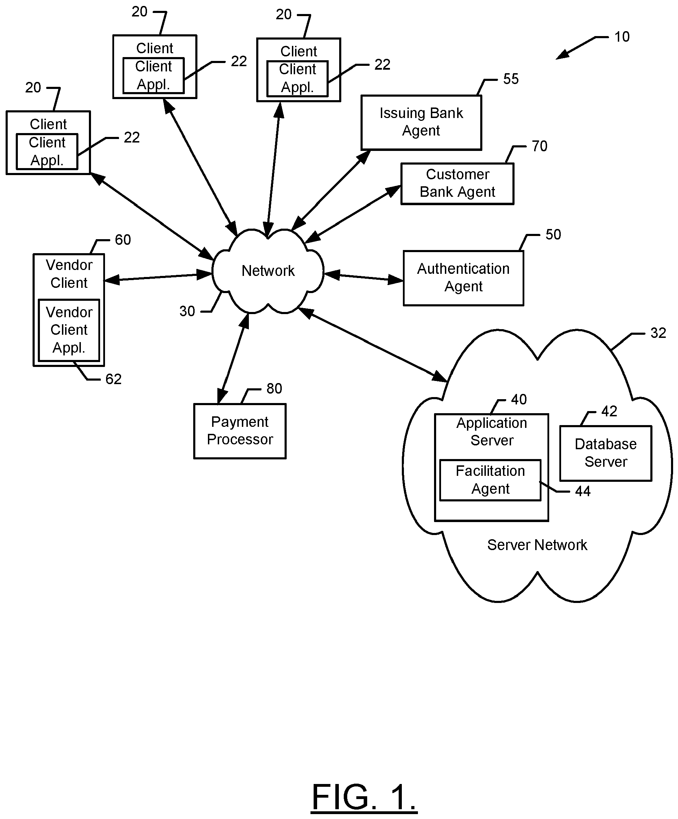

An example embodiment will now be described in reference to FIG. 1, which illustrates an example system in which an embodiment of the present invention may be employed. As shown in FIG. 1, a system comprising an SFP platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the SFP platform 10. Furthermore, in some cases, some embodiments may be practiced on a single client without any connection to the SFP platform 10.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the SFP platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below. In an example embodiment, the client application 22 may be employed to request, configure or use a virtual card, as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions. In an example embodiment, one function that may be provided by the application server 40 may be the provision of access to information and/or services related to the SFP platform 10, and more particularly relating to facilitating transactions where the parties to the transaction are members of the ecosystem formed by the SFP platform 10. For example, the application server 40 may be configured to provide for storage of information descriptive of events or activities associated with the SFP platform 10 and the execution of a financial transaction on behalf of a customer in real time. In some cases, data and/or services may be exchanged amongst members, where specific needs or desires of the members are aligned with respect to playing their respective roles in connection with conducting a financial transaction using tools of the SFP platform 10 as described herein.

In some embodiments, for example, the application server 40 may therefore include an instance of a facilitation agent 44 comprising stored instructions for handling activities associated with practicing example embodiments as described herein. The facilitation agent 44 may be a technical device, component or module affiliated with the facilitator of the functioning of the SFP platform 10. Thus, the facilitation agent 44 may operate under control of the facilitator to be a technical means by which to carry out activities under direction of the facilitator or employees thereof. As such, in some embodiments, the clients 20 may access the SFP platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 40 (e.g., via download over the network 30) to one or more of the clients 20 to enable recipient clients to instantiate an instance of the client application 22 for local operation such that the facilitation agent 44 may be a distributor of software enabling members or parties to participate in operation of the SFP platform 10. Alternatively, another distributor of the software may provide the client 20 with the client application 22, and the facilitation agent 44 may communicate with the client 20 (via the client application 22) after such download to execute functionalities described herein in a client/server relationship.

In an example embodiment, the client application 22 may therefore include application programming interfaces (APIs) and other web interfaces to enable the client 20 to conduct business or transactions via the SFP platform 10. The client application 22 may include a series of control consoles or web pages including a landing page, onboarding services, activity feed, account settings (e.g., user profile information), transaction management services, payment management services and the like in cooperation with a service application that may be executed at the facilitation agent 44. Thus, for example, the client application 22 may enable the customer to review monthly statements, request a virtual card, change settings associated with the virtual (or digital) card, access or adjust information associated with the customer account, or receive help or other information. Budgeting tools and other useful information and other useful tools for managing the finances of the customer may also be available via the client application 22 in some cases.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 40 to communicate with the network 30 and/or the clients 20 for the provision and/or receipt of information associated with performing activities as described herein. Moreover, in some embodiments, the application server 40 may include or otherwise be in communication with an access terminal (e.g., a computer including a user interface) via which individual operators or managers of the entity associated with the facilitation agent may interact with, configure or otherwise maintain the SFP platform 10 and/or the facilitation agent 44.

As such, the environment of FIG. 1 illustrates an example in which provision of content and information associated with the financial industry (e.g., including at least some data provided to/from customers and/or vendors in real-time) may be accomplished by a particular entity (namely the facilitation agent 44 residing at the application server 40). Thus, the facilitation agent 44 may be configured to handle provision of content and information associated with tasks that are associated only with the SFP platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

The SFP platform 10 may also operate in cooperation with a bank authentication agent 50, an issuing bank agent 55, a vendor client 60, a customer bank agent 70, and a payment processor 80. The facilitation agent 44 may be configured to interact with, or otherwise facilitate interactions between, each of the bank authentication agent 50, the issuing bank agent 55, the vendor client 60, the customer bank agent 70, and the payment processor 80 in order to carry out example embodiments as described herein. Thus, each of the bank authentication agent 50, the issuing bank agent 55, the vendor client 60, the customer bank agent 70, and the payment processor 80 should be understood to be a computer, server, smart phone, or other technical component or module associated with a respective party (e.g., an authenticating bank, issuing bank, a vendor, a customer bank, and a payment service, respectively) that is capable of communication with other parties via the network 30, and under control of or responsive to facilitating communication by the facilitation agent 44.

The vendor client 60 may be similar to the client 20 described above, in some cases, except that the vendor client 60 may be associated with a merchant or vendor instead of a customer. The vendor client 60 may therefore also include a downloadable client application (e.g., vendor client application 62) similar to the client application 22 described above. However, the function of the vendor client application 62 may further interface with the facilitation agent 44 as described in greater detail below in order to handle onboarding of the merchant into the ecosystem of the SFP platform 10.

The issuing bank may be a bank or other financial services provider. The issuing bank may have a persistent relationship with the entity associated with the facilitation agent 44 (e.g., the facilitator), but generally need not have any persistent or pre-existing relationship with the customer or the customer bank. The issuing bank may be contracted with or otherwise have a pre-existing relationship with the facilitation agent 44 (and entity associated therewith) that enables the facilitation agent 44 to facilitate transactions on behalf of the customer when certain conditions (agreed upon in advance by the entity associated with the facilitation agent 44 and the issuing bank) are met associated with a transaction undertaken (or attempted) by the customer via the client 20 and client application 22. For example, the issuing bank may be the issuer of credit to the customer on behalf of the facilitation agent 44 and be responsible for directly paying the merchants and vendors during a transaction initiated by the customer via the operation of the SFP platform 10.

The bank authenticator may be an agent or financial service provider capable of granting the facilitation agent 44 access to the customer bank to view account balances and credentials. The balances and credentials may be used or relied upon to pull or push funds from or to the customer bank using the payment processor 80. Thus, for example, the bank authenticator may utilize its own software, application programming interfaces (APIs) or the like that define an infrastructure or intermediary platform to connect a customer's bank account with the facilitation agent 44.

The customer bank may be a bank at which the customer (i.e., associated with one of the clients 20) deposits money in a bank account such as a savings account or a checking account. In an example embodiment, the customer may apply via the facilitation agent 44 to enroll as a member of the SFP platform 10 and enable the customer to make purchases via transactions arranged in association with the facilitation agent 44 using, for example, online payment processing, a virtual card, a physical credit or debit card, or other payment method where the facilitator arranges for the issuing bank to issue a loan (e.g., a BNPL loan or conventional loan) to the customer and advances funds to the merchant associated with the vendor client 60 on behalf of the customer. During application, subscription or registration for the SFP platform 10, the customer may be prompted (via the client 20 and client application 22) by the facilitation agent 44 to provide account details identifying the savings account or checking account (i.e., a customer account) at the customer bank. The customer may, by registering or subscribing, further authorize the facilitation agent 44 to conduct specific activities related to the customer account when corresponding conditions are met, which may be facilitated by one of or a combination of the bank authenticator and the issuing bank as described above. The activities may include checking account status (i.e., checking a current balance of funds deposited in the customer account) and/or authorizing withdrawal of funds from the customer account by the payment processor 80 in order to settle a transaction or make payments to the facilitation agent 44. Credit checks or other activities enabling the customer to be approved for issuance of the virtual card may then be accomplished by the facilitation agent 44.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online. Payments may be provided to the merchant or vendor on behalf of the customer when using the virtual card to make a purchase, and the corresponding amount of the purchase may be converted into a loan (e.g., a BNPL loan or other loan) for the customer. Payments may also or alternatively be made by the customer to service the loan via the payment processor 80.

The customer bank agent 70 may change for each respective one of the clients 20 (and therefore for each respective customer). Similarly, the vendor client 60 may change for each respective transaction since different vendors may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all customers' banks can be accommodated. For example, if the customer bank was not serviced by a first bank authentication agent, the facilitation agent 44 is configured to swap in a second bank authentication agent that would allow for servicing of the customer bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the SFP platform 10 may operate to enable the customer associated with a given one of the clients 20 to make a purchase in real time from a merchant or vendor associated with the vendor client 60 either online or in-store using payment method arranged by the facilitator for the customer. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10. The facilitation agent 44 may prompt the client 20 to provide account details associated with the customer bank agent 70 and may provide terms and conditions (electronically or via mail or other communication means) that the customer may accept to establish a user profile and user account with the facilitation agent 44.

During establishment of the user account, the customer may provide an identification of the customer bank associated with the customer bank agent 70, and may also provide details for the savings or checking account that the customer maintains at the customer bank. The customer may also authorize the facilitation agent 44 to make real time (or anytime) checks on account status (e.g., account balance) or to make periodic routine checks of the same. Thus, for example, for each transaction, the facilitation agent 44 may be enabled to check the account balance of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, and determining credit limits or making credit extension decisions.

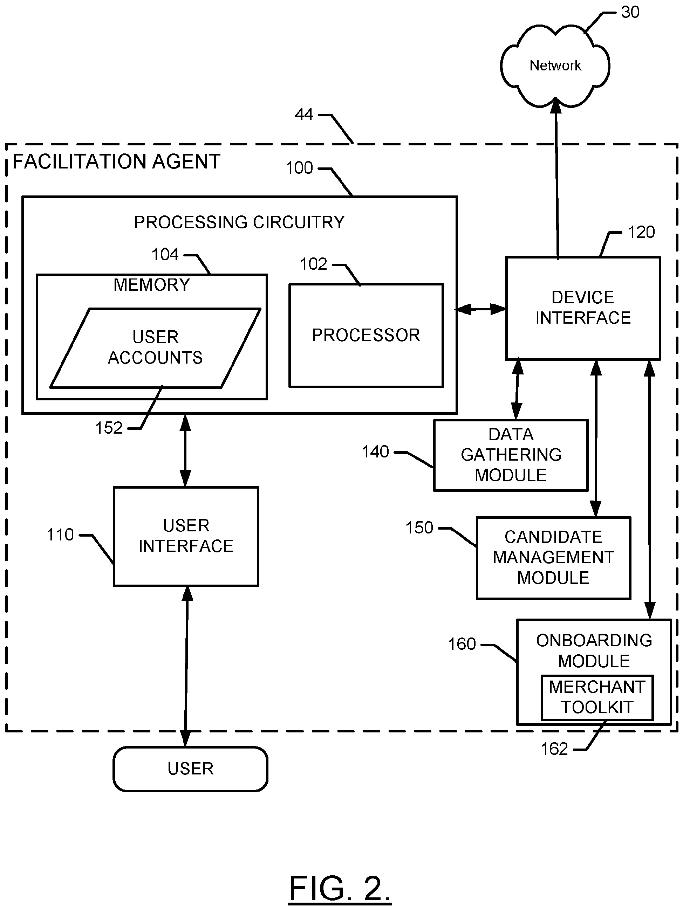

Regardless of how the transactions are initiated, the SFP platform 10 of FIG. 1 may be used before, during and after the time of the transaction in order to enable the facilitation agent 44 to set up the user account for a customer, make determinations necessary to initiate the transactions in real time responsive to initiation of the transaction, and facilitate enabling the customer and to determine the treatment of transactions thereafter. Each of these activities may have its own respective timing and communications that are facilitated by the facilitation agent 44. However, example embodiments may further, as noted above, effectively and efficiently manage the onboarding of merchants into the ecosystem as well. Thus, more merchants may become part of the ecosystem thereby enriching the experience for customers by enhancing the number of ecosystem participants and therefore the number of opportunities for advantageous engagement between members of the ecosystem. Notably, in some embodiments, support for transactions may not be limited only to merchants that are members of the ecosystem. However, by becoming an integrated member of the ecosystem, merchants may be enabled to offer more services, enhancements, offers, and enticements to customers. Thus, integrated merchants may be empowered to attract more customers through engagement enabled by the SFP platform 10 (e.g., via enhanced tool kits, information about customers, or access) than those who are not integrated. Thus, again, enriching the ecosystem provides improved outcomes for all members or participants in the ecosystem. Various examples of structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 40 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 40) or by devices in a client/server relationship (e.g., the application server 40 and one or more clients 20/vendor clients 60). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the SFP platform 10 hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located. For example, in some cases, the user interface 110 may be disposed at a remote device (e.g., the client 20/vendor client 60) and may therefore be operable through communication via the network 30.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 42) that may store a variety of files, contents or data sets. Among the contents of the memory 104, applications (e.g., a service application configured to interface with the client application 22/vendor client application 62) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of customer, merchant or user accounts (and a corresponding profile for each), the provision of tools to enable merchants to define marketing programs, incentives, sales, etc., the means by which customers can engage merchants to pay for services (e.g., financed by a loan such as a BNPL loan), and the coordination of communication and fund transfers to support the operations of the SFP platform 10 as described herein. The tools may be provided in the form of various modules that may be instantiated by configuration of the processing circuitry 100. Many of those tools may relate to aspects that are outside the scope of this disclosure, and therefore will not be discussed specifically herein. Instead, FIG. 2 illustrates some examples of modules that may be included in the facilitation agent 44 and that may be individually configured to perform one or more of the individual tasks or functions generally attributable to the facilitation agent 44 according to an example embodiment and relevant to the focus of this disclosure. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

As shown in FIG. 2, the facilitation agent 44 may include a data gathering module 140, a candidate management module 150 and an onboarding module 160. The data gathering module 140 may be configured to employ various tools and strategies for searching the internet or other publicly available networks, and specifically for searching individual merchant websites to unobtrusively gather information about the merchants associated with each respective one of the merchant websites. In some example embodiments, the data gathering module 140 may employ search engines, web crawlers, web scrapers, spiders, spider bots, internet bots and/or other mechanisms for performing web indexing or otherwise classifying or learning information regarding individual merchant websites. Web content associated with the individual merchant websites may be recorded for study and evaluation (e.g., by the candidate management module 150). The web content may include, of course, information gathered at the individual merchant website. However, the web content may be further augmented by, for each merchant or merchant web site, further investigating activities and/or reputation of the merchant on social media, or other media (e.g., news, magazine, or other reporting services). Thus, for example, after the data gathering module 140 employs web crawlers to identify a merchant, and to extract information about the merchant from the merchant's website, the same or other web crawlers may be employed to search for articles, evaluations, customer rankings, social media activities and/or the like associated with the merchant. The information extracted from social media may include number of followers, subscribers, or likes, or may include an assessment of the level of following, activity or engagement that the merchant has with customers or industry participants.

In an example embodiment, the data gathering module 140 may be configured to perform data gathering in a structured and strategic way organized around specific products, industries or other hierarchical divisions. Certain products, industries or the like may be prohibited programmatically in order to avoid wasting resources on gathering data for products or industries whose merchants will not be approached for onboarding due to practical or business reasons. Thus, the data gathering module 140 may build a hierarchically structured database of information associated with each of the websites investigated. In some embodiments, the information gathered may include objective information regarding each one of a listing of merchants as well as subjective information. In this regard, the objective information may include impartial information such as server status, product offerings, product price, average sale price, sales volume, etc. The subjective information may include a reputation score calculated from social media and online rankings, a payment service compatibility score determined based on an evaluation of the other payment services that the website currently enables customers to use, and/or the like.

The data gathering module 140 may therefore proactively search the internet for information that can ultimately be used to identify the best candidates to add into the ecosystem of the SFP platform 10 as merchants. This proactive searching may be entirely automated, or may be steered in some cases by human intervention. For example, personnel associated with the facilitator may provide the identity of specific business leads, or may identify specific products or industries of interest. The data gathering module 140 may gather data on specific businesses, or for specific products or industries accordingly. Similarly, personnel associated with the facilitator may identify specific characteristics (e.g., products, industries or other signals) that lead to automatic rejection of websites that accordingly will be avoided or rejected for consideration.

The objective information and subjective information described above, along with any other information determined by the data gathering module 140, may be communicated to the candidate management module 150 for further processing. This further processing may include an evaluation, scoring or ranking of the merchant for compatibility with the goals and objectives of the facilitator that operates the SFP platform 10. Thus, for example, the candidate management module 150 may be configured to apply a scoring algorithm or risk determination algorithm to the objective information and/or subjective information to generate the evaluation scoring or ranking described above. Where risk calculations are involved, the candidate management module 150 may generate a risk score that is aimed at determining how much risk the facilitator may take in underwriting the merchant. Alternatively or additionally, the candidate management module 150 may be configured to apply an underwriting decision algorithm to the information received to determine whether the merchant associated with each website evaluated can be underwritten and therefore added as a member or participant to the ecosystem created by the SFP platform 10. In some cases, where higher risk exists, the candidate may be rejected, or may be conditionally accepted while requiring higher reserves to be maintained by the candidate or requiring delayed decisions to be made by human decision makers.

In an example embodiment, the underwriting decision algorithm that is ultimately used may be one of multiple different possible or selectable algorithms. In this regard, the specific algorithms themselves are outside the scope of this disclosure. The algorithm itself is not the point of interest, so much as instead, the fact that the facilitator may define some level of automation with respect to employment of one or more of such algorithms that may be tailored to specific circumstances, products, industries, or the like. However, the facilitator also does not merely provide a means to automate activities that would otherwise be performed manually. Instead, the SFP platform 10 provides a technical means by which to coordinate communications and activities that would otherwise not occur at all, and further to automate such communications and activities to not only improve the application processing speed for onboarding of merchants, but to further expand and proliferate membership to the SFP platform 10 by identifying qualified candidates and making their entry into the platform as seamless as possible.

Of note, underwriting decisions may often include manual interaction with human decision makers who process information and make decisions. With large numbers of merchants applying to join the ecosystem created by the SFP platform 10, a corresponding large load on human resources may slow down the onboarding process since the underwriting decision piece of that process may be overloaded and slow. This may dissuade merchants who lose patience with the process from participation. Example embodiments may automate some or all of the underwriting process to speed up decisions, and increase throughput and satisfaction. However, merely automating certain operations is not even remotely a fair characterization of the advantage offered by the candidate management module 150. Instead, by working in concert with the automatic gathering of information conducted by the data gathering module 140, the candidate management module 150 can employ certain automated operations and algorithms to effectively pre-approve as many candidate merchants as possible for underwriting and for participating in the SFP platform 10 as integrated merchants. Where not pre-approved automatically, the process may in any case be sped up significantly so that less manual intervention is needed.

In an example embodiment, different algorithms for scoring or making underwriting determinations may be specified for different industries and/or different products. Thereafter, candidates that score well enough, or that are approved for underwriting, may be identified as selected candidates for outreach via the onboarding module 160 as described below. The selected candidates may, in some cases, be treated differently based on the scoring of the candidate management module 150. For example, various tiers may be defined (e.g., based on risk or other scores), and the tier to which the selected candidate is assigned may determine a level of service received by the selected candidate. Tiers may, however, be modified over time based on time spent in a tier or a level of participating of the selected candidate within the tier to which the selected candidate was originally assigned. For example, after a predetermined period of time in a lower tier, the selected candidate may automatically graduate to a higher tier. Alternatively or additionally, a given level of activity for the selected candidate within a lower tier may qualify the selected candidate to automatically graduate to a higher tier. Selected candidates may also, in some cases, request graduation to a higher tier to initiate an evaluation by the candidate management module 150 to consider such graduation.

The onboarding module 160 may be configured to utilize contact information obtained by the data gathering module 140 to send communications (e.g., email, SMS, etc.) to the selected candidates to invite the selected candidates to either accept an offer to become a member of the SFP platform (and an integrated merchant), or to continue a process toward the same end. In examples where the candidate management module 150 can generate an automatic assignment of the selected candidate to a tier of service, the notification of such assignment and links to information and tools for use by the merchant based on the assignment may be provided in the communication received from the onboarding module 160. In other cases, a link to continue the process for evaluation or selection may be provided, and the selected candidate may have to take voluntary action to continue the process, which may include dealing with human agents of the facilitator. The onboarding module 160 may, in any case, identify the process or path for onboarding the selected candidate and communicate the same to the selected candidate for either closed loop interaction with human or computer evaluation services, or pre-configured and fully automated processing and integration.

In some embodiments, the onboarding module 160 may also include a merchant toolkit 162 including specific APIs or web interfaces that the selected candidate may use to create content, offers, sales, etc. in connection with their integration into the SFP platform 10. For example, where the selected candidate has an open web site architecture, the merchant toolkit 162 may enable the uploading of information such as merchant branding or product identification into pre-existing templates to generate the types of offers or sales involving loan options (e.g., zero interest, BNPL loan terms, etc.) that the merchant will subsidize or otherwise wish to offer in cooperation with the facilitator for customers that make purchases via their website.

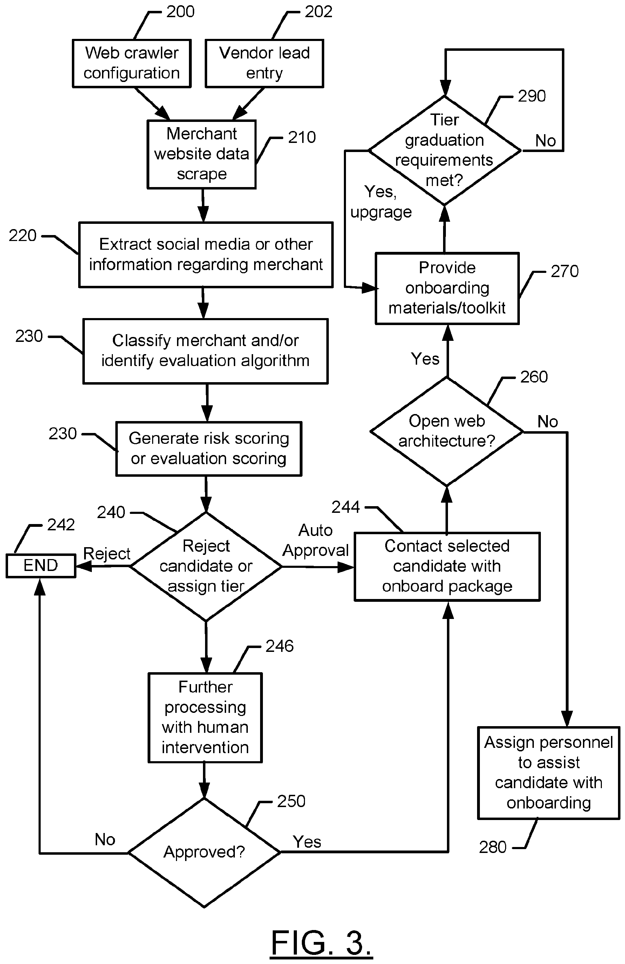

FIG. 3 illustrates a block diagram of a control flow for processing that may be undertaken by the facilitation agent 44 of an example embodiment. In this regard, as shown in FIG. 3, one or more web crawlers may be configured to assist with data gathering at operation 200. As noted above, the web crawlers may be configured to avoid specific industries or products and focus on other industries or products that are acceptable. Other inputs usable for data gathering may include the entry of vendor lead information at operation 202. These and other inputs may be used for merchant website data gathering at operation 210. The websites of various merchants for which website data is scraped may generate objective information about the merchant of various types. However, subjective information may also be gathered such as, for example, via extraction of social media or other information regarding the merchant at operation 220. Web crawlers or similar tools may also be used to support operation 220. Thereafter, although not required, the merchant may be classified (e.g., as a large merchant, mid-sized merchant, online merchant, etc.) and a corresponding one of multiple possible evaluation algorithms may be selected for use at operation 230. The selected algorithm may be used to evaluate the candidate and make a decision regarding rejection or acceptance at operation 240. In some cases, acceptance may correspond to assignment to a particular tier of service to selected candidates.

If the candidate is rejected at operation 242, no further processing may be needed. Meanwhile, if the candidate is approved automatically based on operation of the selected algorithm, then communications may be sent to contact the selected candidate with an onboarding package generated by the onboarding module 160 at operation 244. In cases where full automation is not possible, further processing, perhaps even with human intervention may be performed at operation 246. An approval determination may be the outcome of this process, which may either proceed to operations 242 or 244, as outlined above.

The onboarding package may, in some cases, be dependent upon an architecture of the website of the merchant (i.e., the selected candidate merchant). If the web architecture is open, then a corresponding onboarding package or tool kit may be provided at operation 270. The tool kit may include tools for defining offers, sales, credit boosts and/or the like to customers, along with templates for enabling the selected candidate merchant to utilize the SFP platform 10 to target customers with incentives and enticements to shop with the merchant and drive sales. The templates may include options to enable the merchant to provide branding logos, so that the messaging provided is branded properly. The templates may also include buttons, selectors, and/or input consoles for defining the types of incentives to be presented and specific terms or values for the same.

If the website does not have an open architecture, then personnel may be assigned to interface with technical personnel at the selected candidate merchant in order to facilitate the provision of branding materials and otherwise tailor messaging to the needs of the selected candidate at operation 280. In some cases, specific packages of materials for web architectures similar to those previously encountered, and for which a template has been defined may be provided. Otherwise, a fully manual or partially manual interface and assist from technical personnel of the facilitator may be provided.

As noted above, there may also be an option to upgrade from an initial service tier in some cases as shown by operation 290. In such examples, if tier graduation requirements are not met, then any such graduation may be delayed until a later time at which a subsequent check for meeting the requirements may be made. However, if tier graduation requirements are met, then the service tier may be upgraded and a onboarding package or toolkit for the upgraded tier may be provided at operation 270.

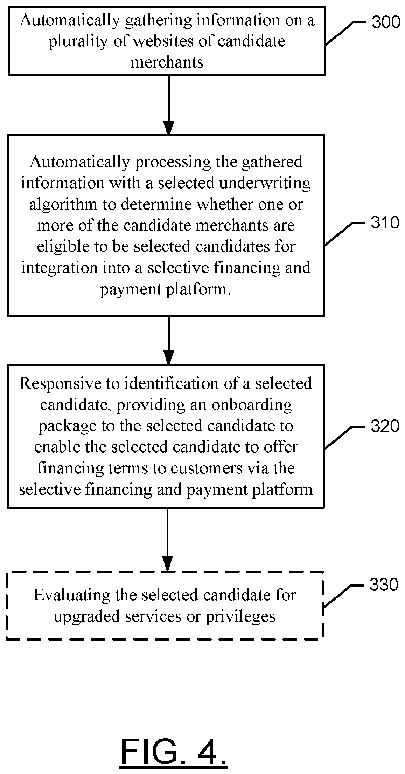

From a technical perspective, the SFP platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 4 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, vendor client 60, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for facilitating merchant onboarding to a selective financing and payment platform is shown in FIG. 4. The method may include automatically gathering information on a plurality of websites of candidate merchants at operation 300. The method may further include automatically processing the gathered information with a selected underwriting algorithm to determine whether one or more of the candidate merchants are eligible to be selected candidates for integration into the selective financing and payment platform at operation 310. The method may also include, responsive to identification of a selected candidate determined to be eligible, providing an onboarding package to the selected candidate to enable the selected candidate to offer financing terms to customers via the selective financing and payment platform at operation 320. Although not required, the method may also include evaluating the selected candidate for upgraded services or privileges after a predetermined period of time or after a predetermined number of transactions involving the selected candidate at operation 330.

In an example embodiment, an apparatus for performing the method of FIG. 4 above may comprise a processor (e.g., the processor 102) or processing circuitry configured to perform some or each of the operations (300-330) described above. The processor may, for example, be configured to perform the operations (300-330) by performing hardware implemented logical functions, executing stored instructions, or executing algorithms for performing each of the operations. In some embodiments, the processor or processing circuitry may be further configured for additional operations or optional modifications to operations 300 to 330.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the selected underwriting algorithm may be selected based on an industry of the candidate merchants, or based on a product offered by the candidate merchants. In an example embodiment, the gathered information may include objective information and subjective information about the candidate merchants. In some cases, the objective information may be related to sales of a product, and the subjective information may be generated from social media activity or reputation scoring. In an example embodiment, automatically gathering information on the plurality of websites of candidate merchants may be performed using programmed web crawlers or bots configured to scrape information from accepted websites and avoid rejected websites. In some cases, the onboarding package may include an indication of pre-approval of the selected candidate to integrate into the selective financing and payment platform, and an invitation to continue or complete a process to integrate into the selective financing and payment platform. In an example embodiment, the onboarding package may further include template materials to enable the selected candidate to define the offer of financing terms to customers. In some cases, the template materials may include a first portion via which a branding logo of the selected candidate is submitted, and a second portion via which loan terms are defined.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of facilitating merchant onboarding to a selective financing and payment platform, the method comprising:
automatically gathering information on a plurality of websites of candidate merchants;
automatically processing the gathered information with a selected underwriting algorithm to determine whether one or more of the candidate merchants are eligible to be selected candidates for integration into the selective financing and payment platform; and
responsive to identification of a selected candidate determined to be eligible, providing an onboarding package to the selected candidate to enable the selected candidate to offer financing terms to customers via the selective financing and payment platform.

2. The method of claim 1, further comprising evaluating the selected candidate for upgraded services or privileges after a predetermined period of time or after a predetermined number of transactions involving the selected candidate.

3. The method of claim 1, wherein the selected underwriting algorithm is selected based on an industry of the candidate merchants.

4. The method of claim 1, wherein the selected underwriting algorithm is selected based on a product offered by the candidate merchants.

5. The method of claim 1, wherein the gathered information includes objective information and subjective information about the candidate merchants.

6. The method of claim 5, wherein the objective information is related to sales of a product, and wherein the subjective information is generated from social media activity or reputation scoring.

7. The method of claim 1, wherein automatically gathering information on the plurality of websites of candidate merchants is performed using programmed web crawlers or bots configured to scrape information from accepted websites and avoid rejected websites.

8. The method of claim 1, wherein the onboarding package comprises an indication of pre-approval of the selected candidate to integrate into the selective financing and payment platform, and an invitation to continue or complete a process to integrate into the selective financing and payment platform.

9. The method of claim 8, wherein the onboarding package further comprises template materials to enable the selected candidate to define the offer of financing terms to customers.

10. The method of claim 9, wherein the template materials include a first portion via which a branding logo of the selected candidate is submitted, and a second portion via which loan terms are defined.

11. An apparatus for facilitating merchant onboarding to a selective financing and payment platform, the apparatus comprising processing circuitry configured to perform the method of any of claims 1-10.
